# EUROPEAN PATENT APPLICATION

(11) **EP 2 369 716 A2**
(43) Date of publication of application: **28.09.2011**
(21) Application number: 10160743.0
(22) Date of filing: 22.04.2010
(51) Int. Cl.: H02J 9/06

(54) **Network device with uninterruptible power supply function**

(30) Priority: 26.02.2010 TW 099203538
(71) Applicant: Connection Technology Systems Inc., Hsichih, Taipei Hsien (TW)
(72) Inventor: Chen, Yu-Hsin, Taiwan, ROC, Keelung City 204 (TW); Yang, Wei-Ping, Taiwan, ROC, Taoyuan County 324 (TW)
(74) Representative: Rees, Simon John Lewis

(57) **Abstract**

A network device with an uninterruptible power supply function is provided. The network device includes a network physical transmission unit, a power connecting part and a backup power supply module. The network physical transmission unit is operated at a user terminal according to a fiber to the home (FTTH) technology or a fiber to the building (FTTB) technology. The power connecting part is in communication with an external power source for receiving electricity from the external power source to operate the network device. If the electricity transmitted from the external power source to the network device is interrupted, the backup power supply provides backup electricity to the network device to maintain normal operation of the network device.

## Description

### FIELD OF THE INVENTION

The present invention relates to a network device, and more particularly to a network device with an uninterruptible power supply function.

### BACKGROUND OF THE INVENTION

With increasing development of information industries and rapid growth of high-tech industries, network communication technologies become prevailing. The network communication technologies may facilitate people to communicate with each other more efficiently and free people from the limitation of space and time. By the technology and environment of network communication, multimedia information (e.g. texts, sound, pictures and images) could be transmitted in an interactive manner. Recently, the optical communication system gradually replaces the electronic communication system in order to increase the communicating speed and quality of Internet. Optical fiber is the most common data transmitting medium of the optical communication system because it advantageous for low loss, high bandwidth, no potential electromagnetic interference problem, light in weight, and good security. As such, the optical fiber communication system has experienced great growth and is now rapidly gaining in popularity.

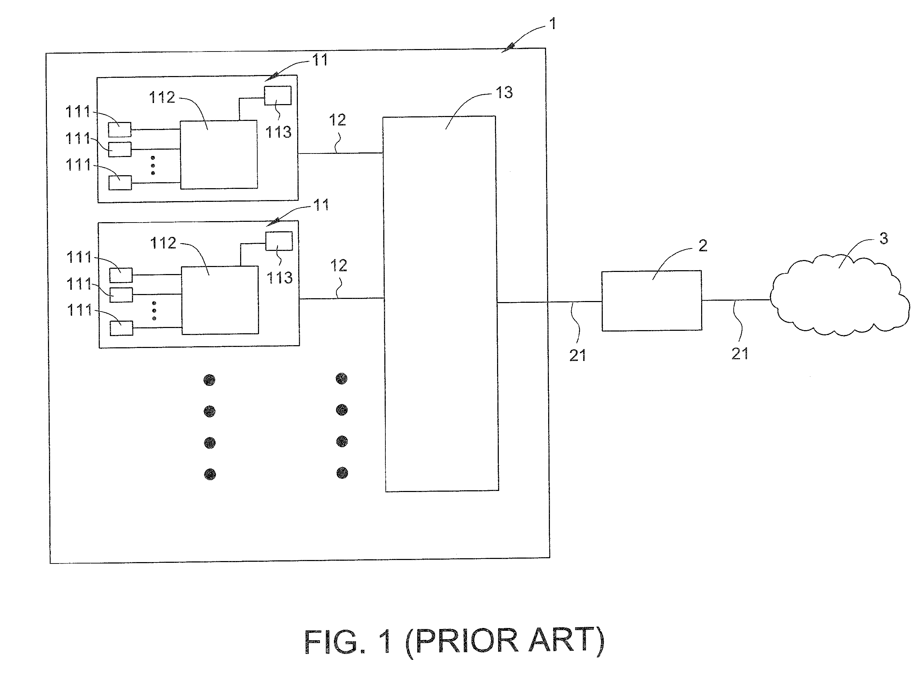

A fiber to the building (FTTB) architecture using telephone cables (e.g. UTP cables) is widely used in a community building. FIG 1 is a schematic functional block diagram illustrating a fiber to the building (FTTB) architecture of a community building according to the prior art. As shown in FIG 1, the community building 1 comprises a plurality of user terminals 11. Each of the user terminals 11 comprises one or more computers 111. These computers 111 are in communication with a network device 112. The network device 112 is for example a hub, a switch or an IP sharer. The network device 112 is powered by a power source 113. The network device 112 is in communication with a network switch 13 through a telephone cable 12. The network switch 13 is installed within the community building 1 by an optical line termination 2 (i.e. a network communication service provider). Through an optical fiber 21, the network switch 13 is in communication with the network equipment of an optical line termination 2 at the network communication service provider side. The network equipment of the optical line termination 2 is in communication with an internet 3 through the optical fiber 21.

By the above FTTB architecture, a data packet could be transmitted from the computer 111 of the user terminal 11 to the internet 3, or the data packet could be transmitted from the internet 3 to the computer 111 of the user terminal 11. By utilizing the high-speed transmitting performance of the optical fiber 21, the data packets could be transmitted to the network switch 13, which is installed within the community building 1 by the optical line termination 2. The data packets are then distributed from the network switch 13 to the user terminals 11 of the community building 1 through the existing telephone cable 12. As such, the network transmission speed of each user terminal 11 is enhanced.

Since the network device 112 of each user terminal 11 is powered by the power source 113 that is provided by a power company, if the electricity provided by the power source 113 is subject to a sudden variation or interruption, the networking resource fails to be normally provided and a data damage problem is possibly incurred. In other words, the FTTB architecture is not user-friendly to the user terminal 11.

Some relevant literatures have been disclosed as follows.

For example, Taiwanese Invention Patent No. 248567 disclosed an uninterruptible power supply apparatus with a network hub function. A network adapting module with a network hub function is employed to issue the status information associated with the uninterruptible power supply to the remote monitoring host, thereby monitoring the uninterruptible power supply in real time. Since the electricity of the uninterruptible power supply is mainly provided to an external load rather than the network adapting module, if the network adapting module is powered off, the communication with the network is interrupted.

In addition, Chinese Invention Patent Publication No. 1327326 disclosed a smart control method for providing electricity to the smart user terminals and implementing network management by using network equipment integrating a charging device, a power system management module, a communication module and a smart module. Although the network equipment can provide stable power to the smart user terminals to prevent the sudden power failure from interrupting the networking tasks, there are still some drawbacks. For example, when one of the smart user terminals intends to perform networking communication with other user terminals through the individual network device, if the electricity to the individual network device is interrupted, the individual network device fails to successfully perform networking communication.

In addition, Taiwanese Utility Patent No. 523217 disclosed an uninterruptible power supply apparatus with a communication function. In addition to the uninterruptible power supply function, this uninterruptible power supply apparatus also has a communication operating function of processing audio, faxing and data signals. Since the uninterruptible power supply apparatus with a communication function is a electronic communication system and the network terminal is connected by using a RJ45 connector as network connecting port, the communication function of this uninterruptible power supply apparatus fails to be applied to a new generation optical communication system (e.g. an optical fiber network).

From the above discussions, some drawbacks are encountered from the conventional uninterruptible power supply system with the network device and need to be obviated.

### SUMMARY OF THE INVENTION

The present invention relates to a network device applied to a fiber to the home (FTTH) technology or a fiber to the building (FTTB) technology.

In accordance with an aspect of the present invention, there is provided a network device with an uninterruptible power supply (UPS) function. The network device includes a network physical transmission unit, a power connecting part and a backup power supply module. The network physical transmission unit includes an optical communication port and a communication connecting port. The network device receives or transmits an optical communication signal through the optical communication port, and receives or transmits a data packet through the communication connecting port. The power connecting part is in communication with an external power source, wherein electricity from the external power source is received by the power connecting part to operate the network device. The backup power supply module is used for providing backup electricity to the network device if the electricity transmitted from the external power source to the network device is interrupted.

In an embodiment, the network physical transmission unit is an optical fiber communication equipment converter. The optical fiber communication equipment converter includes a circuit board and an opto-electronic converting element. The opto-electronic converting element is disposed on the circuit board for converting the optical communication signal into an electronic communication signal, or converting the electronic communication signal into the optical communication signal.

In an embodiment, the optical fiber communication equipment converter is operated at a user terminal according to a fiber to the home (FTTH) technology.

In an embodiment, the optical fiber communication equipment converter is operated at a user terminal according to a fiber to the building (FTTB) technology.

In an embodiment, the optical fiber communication equipment converter is operated at a user terminal for implementing voice communication.

In an embodiment, the optical fiber communication equipment converter further comprises a VoIP (Voice over Internet Protocol) phone chip. The VoIP phone chip is disposed on the circuit board for converting a voice signal into the data packet, or converting the data packet into the voice signal.

In an embodiment, the network physical transmission unit further includes a telephone connecting port, which is connected with a telephone.

In an embodiment, the network device further includes a network management module for detecting electricity information of the backup power supply module and providing the electricity information to the user terminal.

In an embodiment, the network physical transmission unit is a hub, a switch, an IP sharer or a router.

The above objects and advantages of the present invention will become more readily apparent to those ordinarily skilled in the art after reviewing the following detailed description and accompanying drawings, in which:

### BRIEF DESCRIPTION OF THE DRAWINGS

FIG 1 is a schematic functional block diagram illustrating a fiber to the building (FTTB) architecture of a community building according to the prior art;

FIG. 2 is a schematic functional block diagram illustrating a network device according to an embodiment of the present invention;

FIG. 3 is a schematic functional block diagram illustrating an exemplary network device of FIG. 2, in which the detailed configurations of the network physical transmission unit are shown; and

FIG. 4 is a schematic functional block diagram illustrating an exemplary network device of FIG. 2, in which the detailed configurations of the backup power supply module are shown.

### DETAILED DESCRIPTION OF THE PREFERRED EMBODIMENT

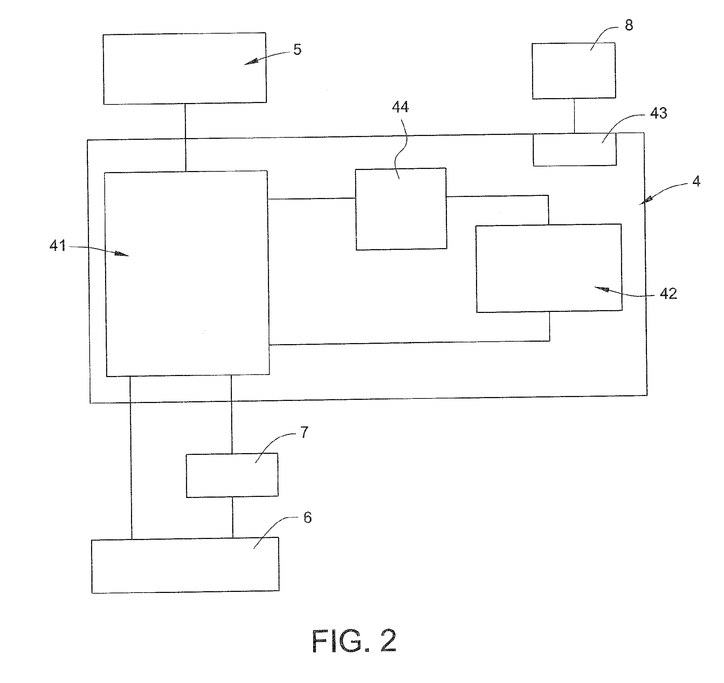

FIG. 2 is a schematic functional block diagram illustrating a network device according to an embodiment of the present invention. The network device 4 is disposed in a use space (e.g. home or office) of a user terminal. A first end of the network device 4 is in communication with an electronic device 5 at the user terminal. A second end of the network device 4 is in communication with the network equipment of an optical line termination 6 or a network switch 7. The network switch 7 is installed within a community building by the optical line termination 6 (i.e. a network communication service provider). The data packets could be transmitted from the electronic device 5 at the user terminal to the network equipment of the optical line termination 6. Alternatively, the data packets could be transmitted from the network equipment of the optical line termination 6 to the electronic device 5 at the user terminal.

The network device 4 comprises a network physical transmission unit 41, a backup power supply module 42, a power connecting part 43 and a network management module 44. The power connecting part 43 is in communication with an external power source 8 for receiving electricity from the external power source 8. The electricity provided by the external power source 8 is used for operating the network device 4. In a case that the electricity provided by the external power source 8 is subject to a sudden variation or interruption, the backup power supply module 42 provides backup electricity required for operating the network device 4. As such, the network device 4 could be normally operated.

In addition, the network management module 44 is used for detecting electricity information of the backup power supply module 42. The electricity information is an important reference for the user at the user terminal. According to the electricity information, the user at the user terminal could realize the duration of operating the network device 4 if no electricity is provided by the external power source 8.

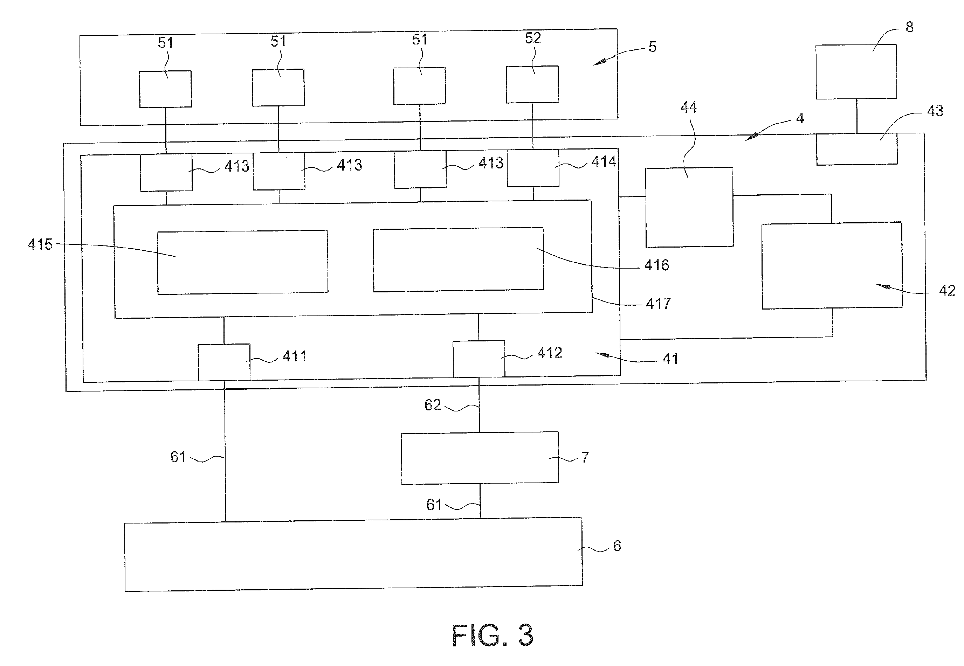

FIG. 3 is a schematic functional block diagram illustrating an exemplary network device of FIG. 2, in which the detailed configurations of the network physical transmission unit are shown. In this embodiment, the network physical transmission unit 41 is an optical fiber communication equipment converter such as a hub, a switch, an IP sharer or a router. As shown in FIG 3, the network physical transmission unit 41 comprises an optical communication port 411, an electric communication port 412, plural communication connecting ports 413, a telephone connecting port 414, an optical-electrical converting element 415, a VoIP (Voice over Internet Protocol) phone chip 416 and a circuit board 417.

The opto-electronic converting element 415 and the VoIP phone chip 416 are disposed on the circuit board 417. The opto-electronic converting element 415 is used for converting an optical communication signal into an electronic communication signal, or converting the electronic communication signal into the optical communication signal. The VoIP phone chip 416 is used for converting a voice signal into a data packet in an electronic communication form, or converting the data packet in the electronic communication form into the voice signal.

In this embodiment, the communication connecting ports 413 are connected with respective computers 51 at the user terminal. Alternatively, the communication connecting port 413 could be connected with an IP Phone. The telephone connecting port 414 is connected with a telephone 52 at the user terminal. An example of the telephone 52 is an ordinary indoor telephone.

Hereinafter, two approaches of connecting the user terminal and the optical line termination 6 through the network physical transmission unit 41 of the network device 4 according to the present invention will be illustrated with reference to FIG. 3. It is noted that, however, those skilled in the art will readily observe that numerous modifications and alterations may be made while retaining the teachings of the invention.

In a first connecting approach, the optical communication port 411 is directly in communication with the network equipment of the optical line termination 6 through an optical fiber 61. This approach can be referred as a fiber to the home (FTTH) technology. Through the optical communication port 411, an optical communication signal from the network equipment of the optical line termination 6 is received by the network physical transmission unit 41, and then the optical communication signal is transmitted to the opto-electronic converting element 415. Alternatively, an optical communication signal is transmitted from the opto-electronic converting element 415 to the optical communication port 411, and then transmitted to the network equipment of the optical line termination 6. As such, the data packets in an electronic communication form could be transmitted from the computers 51 at the user terminal to the network physical transmission unit 41 through the communication connecting ports 413, then the data packets in the electronic communication form are converted into data packets in an optical communication form by the opto-electronic converting element 415, and finally the data packets in the optical communication form are transmitted to the network equipment of the optical line termination 6 through the optical communication port 411 and the optical fiber 61.

On the other hand, the data packets in the optical communication form could be transmitted from the network equipment of the optical line termination 6 to the network physical transmission unit 41 through the optical fiber 61 and the optical communication port 411, then the data packets in the optical communication form are converted into the data packets in the electronic communication form by the opto-electronic converting element 415, and finally the data packets in the electronic communication form are transmitted to the computers 51 at the user terminal through the communication connecting ports 413.

In a second connecting approach, the electric communication port 412 is in communication with the network switch 7 through a telephone cable 62, and then the network switch 7 (which is installed within the community building by the optical line termination 6) is in communication with the network equipment of the optical line termination 6 through an optical fiber 61. This approach can be referred as a fiber to the building (FTTB) technology. Through the electric communication port 412, an electronic communication signal from the network switch 7 is received by the network physical transmission unit 41, and then the electronic communication signal is transmitted to the circuit board 417. Alternatively, the electronic communication signal from the circuit board 417 is received by the electric communication port 412, and then transmitted from the electric communication port 412 to the network switch 7. The data packets to be transmitted between the user terminal and the network switch 7 are both in the electronic communication form.

In other words, when a user at the user terminal intends to communicate with another user at the Internet side through the telephone 52 connected with the network physical transmission unit 41, the voice signal is firstly transmitted to the network physical transmission unit 41 through the telephone connecting port 414. Then, the voice signal is converted into the data packet in the electronic communication form by the VoIP phone chip 416. Afterwards, the voice signal of the user at the user terminal is transmitted to another user by the first connecting approach or the second connecting approach described above. Similarly, the voice signal of another user at the Internet side may be transmitted to the user at the user terminal in the same manner, so that the purpose of communication via voice is achieved.

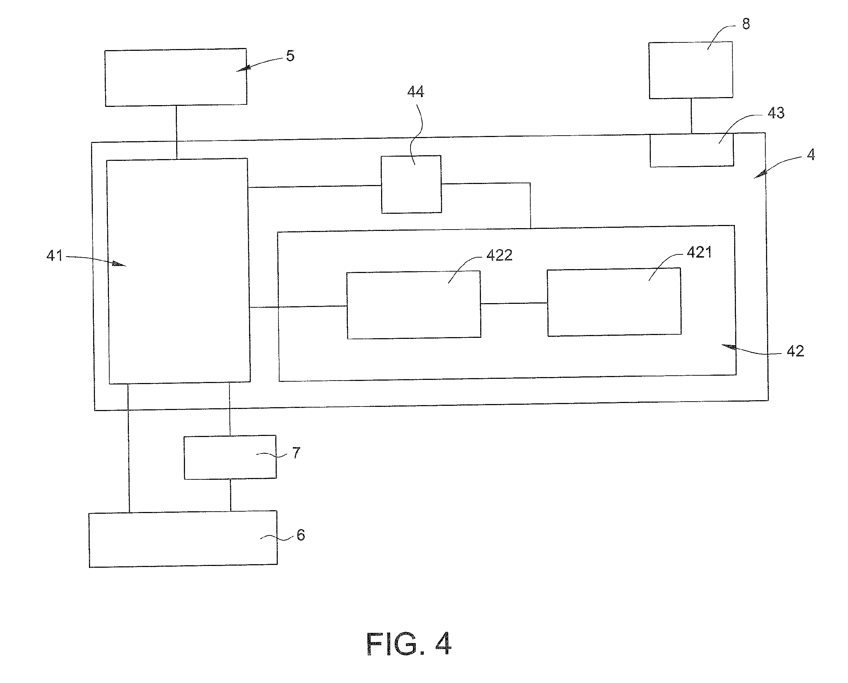

Hereinafter, the key features of the present invention will be illustrated with reference to FIG. 4. FIG. 4 is a schematic functional block diagram illustrating an exemplary network device of FIG. 2, in which the detailed configurations of the backup power supply module are shown. As shown in FIG 4, the backup power supply module 42 comprises a charger 421 and a battery set 422. In a case that electricity provided by the external power source 8 to the network device 4 is normal, the charger 421 also receives the electricity provided by the external power source 8 to charge the battery set 422, so that the battery set 422 is in an electricity saturation status. Whereas, in a case that the external power source 8 fails to normally provide the electricity, the battery set 422 will immediately provide backup electricity to the network physical transmission unit 41.

Therefore, before the electricity quantity stored in the battery set 422 is exhausted, the user at the user terminal may take emergency measures to operating tasks at hand, such as data storing. At the same time, the network management module 44 may detect the electricity quantity stored in the battery set 422, and transmit the information associated with the electricity quantity to the user at the user terminal. According to the information associated with the electricity quantity, the user at the user terminal could take measures. For example, while the user at the user terminal uses an IP phone to perform voice communication, the user may adjust the talking period according to the importance of talking contents.

In the above embodiments, the function of the backup power supply module 42 is exhibited if the electricity provided by the external power source 8 is subject to a sudden variation or interruption. It is noted that, however, those skilled in the art will readily observe that, if the power quality is reduced because of surge, sharp wave, noise, power sag or high (low) voltage transient, the backup power supply module 42 can automatically stabilize the voltage. In this situation, stable and reliable electricity will be continuously received by the network device.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A network device with an uninterruptible power supply (UPS) function, said network device comprising:
a network physical transmission unit comprising an optical communication port and a communication connecting port, wherein said network device receives or transmits an optical communication signal through said optical communication port, and receives or transmits a data packet through said communication connecting port;
a power connecting part in communication with an external power source, wherein electricity from said external power source is received by said power connecting part to operate said network device; and
a backup power supply module for providing backup electricity to said network device if said electricity transmitted from said external power source to said network device is interrupted.

2. The network device with an uninterruptible power supply function according to claim 1 wherein said network physical transmission unit is an optical fiber communication equipment converter, which comprises:
a circuit board; and
an opto-electronic converting element disposed on said circuit board for converting said optical communication signal into an electronic communication signal, or converting said electronic communication signal into said optical communication signal.

3. The network device with an uninterruptible power supply function according to claim 2 wherein said optical fiber communication equipment converter is operated at a user terminal according to a fiber to the home (FTTH) technology.

4. The network device with an uninterruptible power supply function according to claim 2 wherein said optical fiber communication equipment converter is operated at a user terminal according to a fiber to the building (FTTB) technology.

5. The network device with an uninterruptible power supply function according to claim 2 wherein said optical fiber communication equipment converter is operated at a user terminal for implementing voice communication.

6. The network device with an uninterruptible power supply function according to claim 5 wherein said optical fiber communication equipment converter further comprises a VoIP (Voice over Internet Protocol) phone chip, which is disposed on said circuit board for converting a voice signal into said data packet, or converting said data packet into said voice signal.

7. The network device with an uninterruptible power supply function according to claim 6 wherein said network physical transmission unit further comprises a telephone connecting port, which is connected with a telephone.

8. The network device with an uninterruptible power supply function according to claim 1 wherein said network device further comprises a network management module for detecting electricity information of said backup power supply module and providing said electricity information to said user terminal.

9. The network device with an uninterruptible power supply function according to claim 1 wherein said network physical transmission unit is a hub, a switch, an IP sharer or a router.
